# EUROPÄISCHE PATENTANMELDUNG

(11) **EP 3 355 103 A1**
(43) Veröffentlichungstag der Anmeldung: **01.08.2018**
(21) Anmeldenummer: 17153560.2
(22) Anmeldetag: 27.01.2017
(51) Int. Cl.: G02C 13/00

(54) **COMPUTERIMPLEMENTIERTES VERFAHREN ZUR BESTIMMUNG VON ZENTRIERPARAMETERN**

(71) Anmelder: Carl Zeiss AG, 73447 Oberkochen (DE)
(72) Erfinder: NIEUWENHUIS, Claudia, 73457 Essingen (DE)
(74) Vertreter: Patentanwälte Bregenzer und Reule Partnerschaftsgesellschaft mbB

(57) **Zusammenfassung**

Die Erfindung betrifft ein computerimplementiertes Verfahren zur Bestimmung von Zentrierparametern, wobei mindestens zwei gleichzeitig aus unterschiedlichen Blickrichtungen aufgenommene kalibrierte Bilder des Kopfes bereitgestellt werden und wobei mittels geometrischer Positionsbestimmung geometrische Parameter ermittelt werden, die die Position der Augen beschreiben, wobei ein geometrische Parameter der Brillenfassung beschreibender dreidimensionaler Datensatz bereitgestellt wird, wobei mittels einer rigiden Transformation die geometrischen Parameter der Brillenfassung und die die Position der Augen beschreibenden geometrischen Parameter zueinander in Bezug gebracht werden und wobei aus den die Brillenfassung beschreibenden und den die Position der Augen beschreibenden geometrischen Parametern die Zentrierparameter berechnet werden.

## Beschreibung

Die Erfindung betrifft ein computerimplementiertes Verfahren zur Bestimmung von Zentrierparametern gemäß Oberbegriff des Anspruchs 1.

Zentrierparameter werden benutzt, um Brillengläser korrekt in einer Brillenfassung anzuordnen bzw. zu zentrieren, so dass die Brillengläser in korrekter Position relativ zu den Augen der die Brille tragenden Person angeordnet sind. Dabei handelt es sich zum Teil um anatomische Parameter der betreffenden Person, wie beispielsweise den Pupillenabstand, zum Teil um rein fassungsspezifische Parameter wie die Fassungsscheibenbreite oder die Fassungsscheibenhöhe und zum Teil um Kombinationen aus anatomischen und fassungsspezifischen Parametern, wie beispielsweise den Hornhautscheitelabstand und die Durchblickshöhe. Einen Überblick über die gängigen Zentrierparameter gibt die DIN EN ISO 13666 vom Oktober 2013.

Mit Hilfe von Zentriervorrichtungen für die Zentrierung von Brillengläsern wird die Messung von Abständen und Maßen vorgenommen, welche für die Herstellung und das Einschleifen der Brillengläser relevant sind. Für den Augenoptiker ist es wichtig, einen möglichst schnellen und fehlerfreien Arbeitsfluss zu haben, um eine hohe Qualität der Beratung zu erzielen, die den Endkunden im Fokus hat und nicht von technischen Prozessen dominiert ist. In diesem Zusammenhang ist eine möglichst störungsfreie Funktionsweise (Robustheit) bei gleichzeitig hoher Präzision der automatischen Verfahren notwendig. Dies kann mit Methoden der digitalen Bildanalyse, des maschinellen Lernens und unter Einbeziehung von Modellwissen erreicht werden. Die Zentriervorrichtung ist dabei mit mehreren Kameras ausgestattet, die simultan mehrere Bilder des Endkunden aufnehmen. Bei den bisherigen Zentriervorrichtungen setzt der Kunde dabei eine Fassung auf. In den Bildern werden automatisch Merkmale wie Pupillenmitten und Fassungsrand detektiert und deren subpixelgenaue Position bestimmt. An Hand dieser gemessenen Bildpositionen können im Anschluss mit Hilfe von Zentrieralgorithmen die relevanten Parameter für die Brillenglaszentrierung ermittelt werden. Zentriermessungen mit Brillenfassungen, die nicht im Laden des Optikers vorhanden sind, sind dabei aber nicht möglich.

Es ist daher Aufgabe der Erfindung, ein Verfahren der eingangs genannten Art derart weiterzuentwickeln, dass es dem Kunden eine bessere Auswahl an Brillenfassungen ermöglicht.

Diese Aufgabe wird erfindungsgemäß durch ein Verfahren mit den Merkmalen des Anspruchs 1 gelöst. Vorteilhafte Weiterbildungen der Erfindung sind Gegenstand der abhängigen Ansprüche.

Der Erfindung liegt der Gedanke zugrunde, auch Zentriermessungen des Kunden mit Brillenfassungen vorzunehmen, die nicht im Laden sondern nur als 3D-Datensatz vorhanden sind. Dadurch kann man dem Kunden eine viel größere Menge an Brillenfassungen zur Auswahl stellen, die in einem Laden gar keinen Platz finden würde. Außerdem können auch speziell für den Kunden individualisierte Brillenfassungen vermessen werden, bevor sie überhaupt hergestellt werden. Das ermöglicht es dem Kunden eine viel größere Variation an Brillenfassungen auszuprobieren und gleich vermessen zu lassen, ohne die Brillenfassung überhaupt aufsetzen zu müssen. Dabei ist es ausreichend, wenn der die geometrischen Parameter der Brillenfassung, die die Geometrie der Brillenfassung beschreiben, beschreibende Datensatz als mindestens eine dreidimensionale Punktwolke bereitgestellt wird - es werden keine Metadaten wie Tracerkontur der Brillengläser etc. benötigt. Dabei werden zueinander kalibrierte Bilder bereitgestellt. Deren Kalibrierung umfasst die extrinsischen Eigenschaften der die Bilder aufnehmenden Kameras oder der die Bilder aufnehmenden Kamera wie die relative Ausrichtung ihrer optischen Achsen sowie die relative Anordnung zueinander im Raum, sowie ihre intrinsischen Eigenschaften, also die Eigenschaften der Kameras bzw. der Kamera selbst, die definieren, wie ein Punkt im Raum, der sich im internen Koordinatensystem der jeweiligen Kamera befindet, auf die Koordinaten der Pixel des aufgenommenen Bildes abgebildet wird. Eine ausführliche Beschreibung der Kalibrierung von Kameras findet sich im Lehrbuch "Multiple View Geometry in Computer Vision" von Richard Hartley und Andrew Zisserman, 2. Auflage, Cambridge University Press 2004, und dort insbesondere auf Seite 8.

Mittels geometrischer Positionsbestimmung werden geometrische Parameter ermittelt, die die Position der Augen beschreiben. Ein geometrische Parameter der Brillenfassung beschreibender dreidimensionaler Datensatz wird bereitgestellt und mittels einer rigiden Transformation werden die geometrischen Parameter der Brillenfassung und die die Position der Augen beschreibenden geometrischen Parameter zueinander in Bezug gebracht. Aus den die Brillenfassung beschreibenden und den die Position der Augen beschreibenden geometrischen Parametern werden nachfolgend die Zentrierparameter berechnet.Unter einer rigiden Transformation versteht man eine Translation, Rotation oder Spiegelung oder Kombinationen davon.

Der die geometrischen Parameter der Brillenfassung beschreibende Datensatz kann in Form von mehreren Punktwolken bereitgestellt werden, wobei jede Punktwolke ein Teil der Brillenfassung beschreibt. Zudem wird bevorzugt, dass der die geometrischen Parameter der Brillenfassung beschreibende Datensatz die Orientierung der Punktwolke im Raum umfasst. Alternativ hierzu ist es auch möglich, dass die Orientierung der Punktwolke im Raum berechnet wird, indem automatisch die einzelnen Teile der Fassung erkannt werden und sodann die Bügel in eine Vorzugsrichtung, z.B. nach hinten orientiert werden.

Der die geometrischen Parameter der Brillenfassung beschreibende Datensatz umfasst zweckmäßig markante Punkte, insbesondere eine markante Punktfolge, der Brillenfassung, welche vorbestimmt werden. Diese können die Position und/oder die Orientierung der Achsen für die Scharniere der Bügel sein und/oder die Brückenmitte und/oder die Ohrauflagepunkte und/oder der Fassungsinnenrand und/oder der Glasaußenrand und/oder die Endpunkte der Bügel. Gemäß einer vorteilhaften Weiterbildung der Erfindung werden aus dem die geometrischen Parameter der Brillenfassung beschreibenden Datensatz die zur Brillenfassung gehörenden Glasränder bestimmt. Dabei wird zweckmäßig ein dreidimensionales Modell für die Gläser der Brille näherungsweise an die bestimmten Glasränder angepasst. Dieses dreidimensionale Modell für die Brillengläser kann Glasoberflächen und/oder Glasebenen umfassen oder, in einer einfacheren Variante, aus Glasebenen bestehen.

Weiterhin ist es möglich, ein dreidimensionales Modell für die Brillenfassung und/oder Teile der Brillenfassung und/oder die Gläser der Brille näherungsweise an den dreidimensionalen Datensatz anzupassen.

Das dreidimensionale Modell kann ein parametrisches Modell sein, dessen Parameter mittels Optimierungsverfahren an den dreidimensionalen Datensatz, der z.B. die Punktwolke oder die Mehrzahl an Punktwolken enthält, angepasst werden.

Für die geometrische Positionsbestimmung können verschiedene Verfahren angewandt werden. Bevorzugt wird jedoch, dass die geometrische Positionsbestimmung ein Triangulationsverfahren umfasst.

Vorzugsweise wird das erfindungsgemäße computerimplementierte Verfahren mit einer Vorrichtung durchgeführt, wie sie grundsätzlich im Anspruch 13 und im Detail in der folgenden Figurenbeschreibung beschrieben wird.

Im Folgenden wird die Erfindung anhand eines in der Zeichnung schematisch dargestellten Ausführungsbeispiels näher erläutert. Es zeigt:

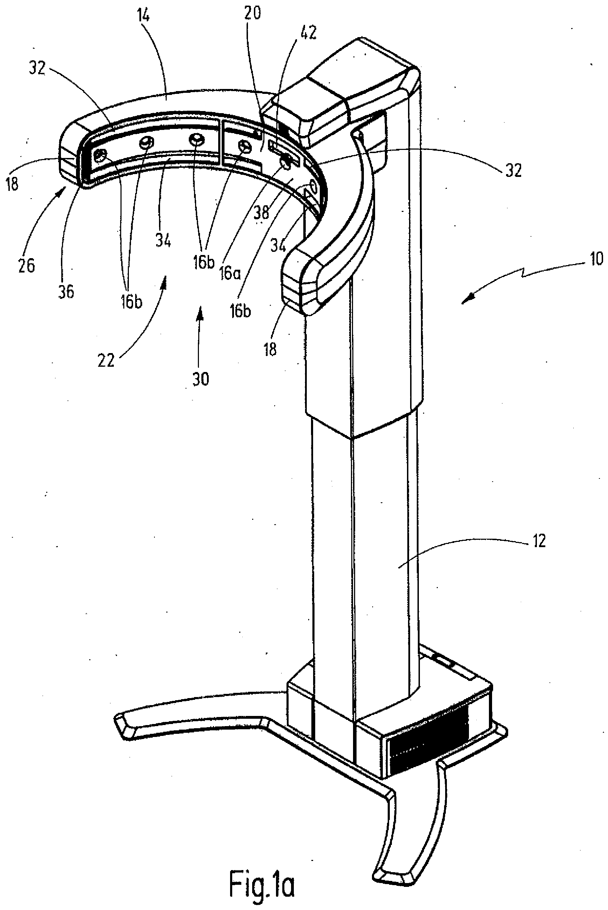

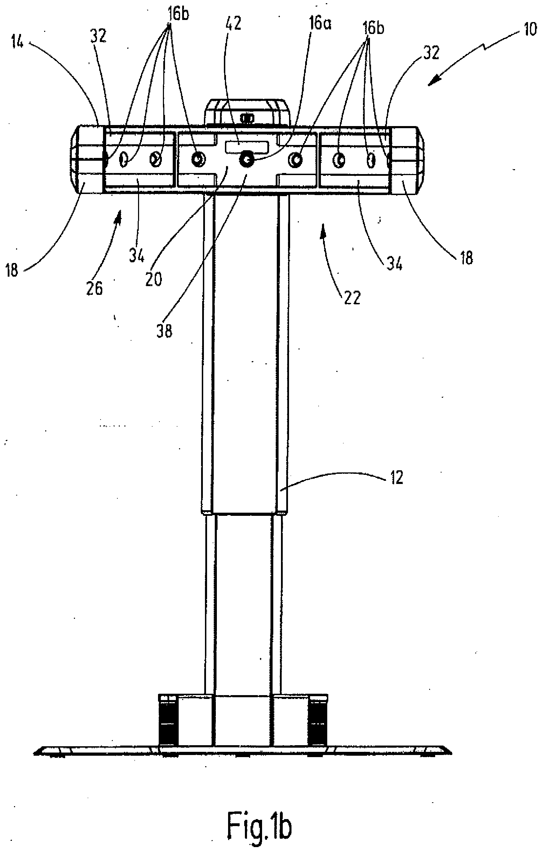

- Figur 1a, b: eine Vorrichtung zur Bestimmung von Zentrierparametern in perspektivischer Ansicht und in einer Ansicht von vorne;
- Figur 2a, b: die Darstellung einer Brillenfassung vor und nach der Orientierung im Raum und
- Figur 3: die Darstellung der Brillenfassung gemäß Figur 2b als dreidimensionale Punktwolke mit angepassten Glasebenen.

Die in der Zeichnung dargestellte Vorrichtung 10 dient der Bestimmung von Zentrierparametern für die Brillenanpassung. Sie weist eine Säule 12 auf, die höhenverstellbar einen starren Kameraträger 14 trägt, welcher wiederum eine Anzahl Kameras 16a, 16b trägt. Der Kameraträger 14 ist in Draufsicht näherungsweise kreisförmig gebogen und erstreckt sich zwischen zwei freien Enden 18, welche im Abstand zueinander angeordnet sind. Nach vorne, also zur Säule 12 hin, und zu den Seiten umschließt eine Innenfläche 20 des Kameraträgers 14 einen Innenraum 22, in dem sich bei der Aufnahme von Bildern durch die Kameras 16a, 16b der Kopf eines Probanden befindet. Die Innenfläche 20 ist in einer Richtung, die zwischen den freien Enden 18 verläuft, konkav gebogen und weist beispielsweise die Form eines Abschnitts einer Zylindermantelfläche auf, wobei der Zylinder eine kreisrunde oder ovale Grundfläche haben kann. Um den Kameraträger 14 bezüglich des Kopfs des Probanden auf der richtigen Höhe positionieren zu können, ist in der Säule 12 eine nicht näher dargestellte Hubeinrichtung angeordnet, mit der der Kameraträger 14 motorisch angetrieben auf und ab bewegt werden kann.

Alle Kameras 16a, 16b sind in einer sich zwischen den freien Enden 18 erstreckenden Kameraanordnung 26 angeordnet. Im vorliegenden Ausführungsbeispiel ist die Kameraanordnung 26 als Kamerareihe 26 ausgebildet, deren Kameras 16a, 16b sich alle in derselben Höhe befinden, wobei ihre optischen Achsen auf den Innenraum 22 gerichtet sind. Im vorliegenden Ausführungsbeispiel umfasst die Kamerareihe 26 eine in der Mitte des Kameraträgers 14 angeordnete Frontkamera 16a, deren optische Achse frontal auf das Gesicht des Probanden gerichtet ist, sowie acht paarweise symmetrisch bezüglich einer durch die optische Achse der Frontkamera 16a verlaufenden senkrechten Symmetrieebene angeordnete Seitenkameras 16b von denen jeweils vier von links und von rechts auf das Gesicht des Probanden gerichtet sind. Die Kameras 16a, 16b sind zudem kalibriert, so dass sie gleichzeitig kalibrierte Bilder des Probanden aufnehmen können. Die Kalibrierung umfasst die extrinsischen Eigenschaften wie die relative Ausrichtung ihrer optischen Achsen sowie die relative Anordnung zueinander im Raum, sowie ihre intrinsischen Eigenschaften, also die Eigenschaften der Kameras selbst, die definieren, wie ein Punkt im Raum, der sich im internen Koordinatensystem der jeweiligen Kamera befindet, auf die Koordinaten der Pixel des aufgenommenen Bildes abgebildet wird.

Der Kameraträger 14 umschließt den Innenraum 22 nur nach vorne, zur Säule 12 hin, und zu den Seiten, also links und rechts des Kopfes des Probanden. Nach oben, unten sowie zu einer Rückseite 30 hin ist er offen, wobei die freien Enden 18 zueinander einen Abstand von mindestens 25cm aufweisen, so dass sich der Proband bequem von der Rückseite aus nähern kann. Im gezeigten Ausführungsbeispiel beträgt der Abstand 70 bis 80cm.

Zur Ausleuchtung des Innenraums 22 ist eine Beleuchtungseinrichtung mit einer oberhalb der Kamerareihe 26 verlaufenden oberen Lichtleiste 32 sowie einer unterhalb der Kamerareihe 26 verlaufenden unteren Lichtleiste 34 vorgesehen, welche jeweils eine Vielzahl von LEDs als Leuchtmittel aufweisen. Die obere Lichtleiste 32 und die untere Lichtleiste 34 erstrecken sich jeweils durchgehend oder mit Unterbrechungen über eine Länge, die mindestens so groß ist wie die Länge der in Umfangsrichtung zwischen den freien Enden 18 gemessenen Länge der Kamerareihe 26. Diese entspricht einem Umfangswinkel von mindestens 160 Grad. Nahe den freien Enden 18 sind die obere Lichtleiste 32 und die untere Lichtleiste 34 jeweils mittels einer vertikal verlaufenden weiteren Lichtleiste 36 miteinander verbunden. Die Kamerareihe 26 wird somit vollständig durch mindestens eine Reihe LEDs umrahmt. Die Vorrichtung 10 weist zudem eine in der Zeichnung nicht näher dargestellte Steuer- oder Regeleinrichtung auf, mit der die von den LEDs abgestrahlte Lichtintensität abhängig von der durch die Kameras 16a, 16b detektierten Lichtintensität gesteuert oder geregelt werden kann. Die LEDs der Lichtleisten 32, 34, 36 sind dabei zu Sektoren zusammengefasst, deren abgestrahlte Lichtintensitäten getrennt voneinander gesteuert bzw. geregelt werden können. Zudem ist vorgesehen, dass auch die von den einzelnen LEDs abgestrahlten Lichtintensitäten mittels der Steuer- oder Regeleinrichtung getrennt voneinander gesteuert oder geregelt werden können.

Um den Probanden richtig im Innenraum 22 positionieren zu können, sind die beiden der Frontkamera 16a nächstgelegenen Seitenkameras 16b dazu eingerichtet, den Abstand des Kopfs des Probanden von der Mitte 38 des Kameraträgers 14 zu messen. Mittels einer nicht näher dargestellten Anzeigeeinheit wird dem Probanden angezeigt, ob er richtig steht oder nicht. Die Anzeigeeinheit weist mehrere unterschiedlich eingefärbte Lichtquellen auf, die in einer Reihe angeordnet sind. Die mittlere Lichtquelle leuchtet grün, wenn der Proband richtig steht. Ausgehend von der mittleren Lichtquelle gibt es in jeder Richtung in dieser Reihenfolge eine gelbe, eine orangene und eine rote Lichtquelle, die entsprechend der Farbe anzeigt, wenn der Proband ein wenig, deutlich oder viel zu weit von der Mitte 38 des Kameraträgers 14 entfernt bzw. ein wenig, deutlich oder viel zu nah zur Mitte 38 steht. Um bei der Bestimmung der Zentrierparameter sicherzustellen, dass die Blickrichtung des Probanden ins Unendliche gerichtet ist, ist eine am Kameraträger 14 angeordnete Fixationseinrichtung 42 vorgesehen, die ein Fixationsmuster für den Probanden in Form eines Specklemusters erzeugt. Das Fixationsmuster ist etwas höher angeordnet als die Frontkamera 16a, so dass der Proband über diese hinwegblickt. Damit kann sein Gesicht im größtmöglichen Umfang aufgenommen werden.

Die Vorrichtung 10 eignet sich insbesondere auch zur Herstellung eines Avatars des Kopfs des Probanden, welcher zur Bestimmung der Zentrierparameter herangezogen werden kann. Zum diesem Zweck werden durch die Kameras 16a, 16b kalibrierte Bilder des Kopfs des Probanden ohne Brille bzw. Brillenfassung aufgenommen. Mittels eines geeigneten Prozesses zur geometrischen Positionsbestimmung wie beispielsweise Triangulation wird ein Tiefenprofil des Kopfes erstellt, das diesen näherungsweise sehr gut abbildet. Der Kopf wird durch eine Vielzahl von Punkten abgebildet, die mittels eines Netzmusters miteinander verbunden werden können oder aber als Punktwolke gespeichert werden können. Bei der anschließenden Bestimmung der Zentrierparameter kann der so ermittelte Avatar herangezogen werden, um Zentrierparameter zu bestimmen, die aufgrund der geometrischen Eigenschaften der Brille bzw. Brillenfassung, die der Proband trägt, nicht oder nur näherungsweise bestimmt werden können. Beispielsweise kann ein breiter Fassungsbügel das Auge in einer Seitenaufnahme soweit verdecken, dass der Hornhautscheitelabstand nicht oder nur sehr ungenau bestimmt werden kann. Zudem können gefärbte oder stark spiegelnde Brillengläser die Augen nicht oder nur sehr schlecht erkennen lassen. Um dem zu begegnen, wird auf die von den Kameras 16a, 16b aufgenommenen Bilder des die Brille oder Brillenfassung tragenden Probanden das Tiefenprofil des Avatars projiziert und die Zentrierparameter, die aufgrund der durch die Brille bzw. Brillenfassung eingeschränkten Sicht nur ungenügend bestimmt werden können, werden mittels der Bilddaten des Avatars bestimmt. Dabei kann eine Anpassung des Avatars auf die Bilder des die Brille bzw. Brillenfassung tragenden Probanden zur Minimierung von Abweichungen erfolgen.

Alternativ oder zusätzlich zur Herstellung des Avatars kann die Vorrichtung 10 wie folgt zur Durchführung eines computerimplementierten Verfahrens zur Bestimmung von Zentrierparametern verwendet werden.

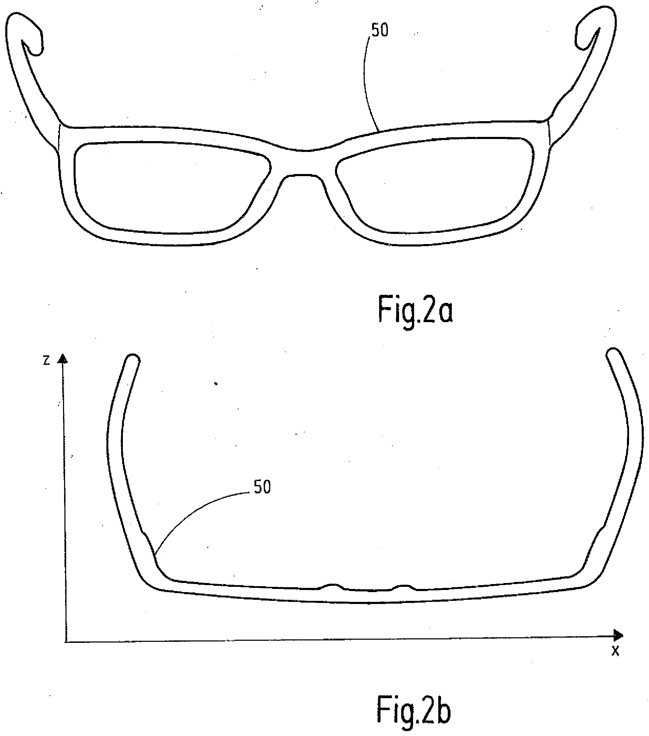

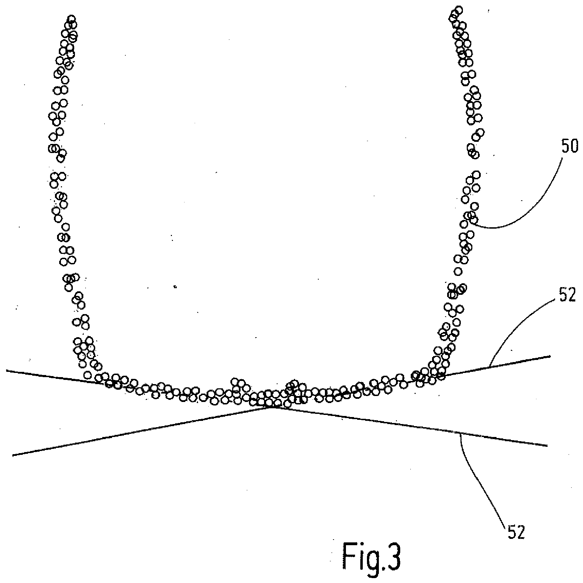

Zunächst werden von den Kameras 16a, 16b gleichzeitig aufgenommene kalibrierte Bilder des Kopfs des Probanden bereitgestellt. Aus diesen Bildern werden mittels geometrischer Positionsbestimmung, insbesondere mittels Triangulation, geometrische Parameter ermittelt, die die Position der Augen beschreiben. Insbesondere kann auch der oben beschriebene Avatar hierzu herangezogen werden. Sodann wird ein die geometrischen Parameter der Brillenfassung beschreibender dreidimensionaler Datensatz bereitgestellt, wie in Figur 2a anhand eines Brillengestells 50 veranschaulicht. Zur Vereinfachung ist in Figur 2a das Brillengestell 50, das als dreidimensionale Punktwolke vorliegt, vereinfacht mit durchgezogenen Linien und nicht in Form von Punkten dargestellt. Mittels einer rigiden Transformation oder Starrkörpersimulation wird die das Brillengestell 50 beschreibende dreidimensionale Punktwolke in eine Trageposition bezüglich der die Position der Augen definierenden Parameter gebracht, wozu sie gedreht und virtuell auf den Kopf "aufgesetzt" wird. Figur 2b veranschaulicht die Drehung in das Koordinatensystem der Kameras 16a, 16b, wobei die z-Richtung durch die Blickrichtung der Frontkamera 16a vorgegeben wird. Anhand der die Position der Augen beschreibenden geometrischen Parameter und der die Brillenfassung in der Trageposition beschreibenden geometrischen Parameter werden Zentrierparameter berechnet, wie beispielsweise der Hornhautscheitelabstand. Zur Vereinfachung des Verfahrens werden die Gläser der Brille näherungsweise durch Ebenen 52 dargestellt, wie in Figur 3 gezeigt, in der die Brillenfassung 50 auch als Punktwolke dargestellt ist. Zu diesem Zweck werden aus dem die geometrischen Parameter der Brillenfassung beschreibenden Datensatz die zur Brillenfassung gehörenden Glasränder bestimmt und es wird ein dreidimensionales Modell für die Gläser der Brille näherungsweise an die bestimmten Glasränder angepasst, wobei dieses Modell aus den Glasebenen 52 besteht.

## Patentansprüche

1. Computerimplementiertes Verfahren zur Bestimmung von Zentrierparametern, wobei mindestens zwei aus unterschiedlichen Blickrichtungen aufgenommene zueinander kalibrierte Bilder des Kopfes bereitgestellt werden und wobei mittels geometrischer Positionsbestimmung geometrische Parameter ermittelt werden, die die Position der Augen beschreiben, wobei ein geometrische Parameter der Brillenfassung beschreibender dreidimensionaler Datensatz bereitgestellt wird, wobei mittels einer rigiden Transformation die geometrischen Parameter der Brillenfassung und die die Position der Augen beschreibenden geometrischen Parameter zueinander in Bezug gebracht werden und wobei aus den die Brillenfassung beschreibenden und den die Position der Augen beschreibenden geometrischen Parametern die Zentrierparameter berechnet werden.

2. Computerimplementiertes Verfahren nach Anspruch 1, **dadurch gekennzeichnet, dass** der die geometrischen Parameter der Brillenfassung beschreibende Datensatz als mindestens eine dreidimensionale Punktwolke bereitgestellt wird.

3. Computerimplementiertes Verfahren nach Anspruch 2, **dadurch gekennzeichnet, dass** mehrere Punktwolken für unterschiedliche Teile der Brillenfassung bereitgestellt werden.

4. Computerimplementiertes Verfahren nach Anspruch 2 oder 3, **dadurch gekennzeichnet, dass** der die geometrischen Parameter der Brillenfassung beschreibende Datensatz eine Orientierung der mindestens einen Punktwolke im Raum umfasst.

5. Computerimplementiertes Verfahren nach einem der Ansprüche 2 oder 3, **dadurch gekennzeichnet, dass** eine Orientierung der mindestens einen Punktwolke im Raum berechnet wird.

6. Computerimplementiertes Verfahren nach einem der vorangehenden Ansprüche, **dadurch gekennzeichnet, dass** der die geometrischen Parameter der Brillenfassung beschreibende Datensatz einen oder mehrere vorbestimmte Punkte der Brillenfassung umfasst.

7. Computerimplementiertes Verfahren nach einem der vorangehenden Ansprüche, **dadurch gekennzeichnet, dass** aus dem die geometrischen Parameter der Brillenfassung beschreibenden Datensatz die zur Brillenfassung gehörenden Glasränder bestimmt werden.

8. Computerimplementiertes Verfahren nach einem der vorangegangenen Ansprüche , **dadurch gekennzeichnet, dass** ein dreidimensionales Modell für die Brillenfassung und/oder Teile der Brillenfassung und/oder die Gläser der Brille näherungsweise an den dreidimensionalen Datensatz oder an die bestimmten Glasränder angepasst wird.

9. Computerimplementiertes Verfahren nach Anspruch 8, **dadurch gekennzeichnet, dass** das dreidimensionale Modell für die Brillengläser Glasoberflächen und/oder Glasebenen (52) umfasst oder aus diesen besteht.

10. Computerimplementiertes Verfahren nach einem der Ansprüche 8 oder 9, **dadurch gekennzeichnet, dass** das dreidimensionale Modell ein parametrisches Modell ist, dessen Parameter angepasst werden.

11. Computerimplementiertes Verfahren nach einem der vorangehenden Ansprüche, **dadurch gekennzeichnet, dass** die geometrische Positionsbestimmung ein Triangulationsverfahren umfasst.

12. Computerprogramm mit Programmcode zur Durchführung aller Verfahrensschritte nach einem der vorangehenden Ansprüche, wenn das Computerprogramm in einem Computer geladen und in einem Computer ausgeführt wird.

13. Verwendung einer Vorrichtung (10) zur Durchführung eines computerimplementierten Verfahrens nach einem der Ansprüche 1 bis 9, wobei die Vorrichtung (10) einen Kameraträger (14) aufweist, welcher einen nach oben, nach unten und zu einer Rückseite (30) hin offenen Innenraum (22) teilweise umschließt und mindestens drei Kameras (16a, 16b) trägt, die zwischen zwei freien Enden (18) des Kameraträgers (14) angeordnet und auf den Innenraum (22) gerichtet sind, wobei der Kameraträger (14) zur Beleuchtung des Innenraums (22) eine Beleuchtungseinrichtung (32, 34, 36) aufweist.

14. Computer, umfassend einen Speicher, wobei in dem Speicher das Computerprogramm nach Anspruch 12 gespeichert ist, und einen Prozessor, um das in dem Speicher abgespeicherte Computerprogramm auszuführen.

15. Computer nach Anspruch 14, **dadurch gekennzeichnet, dass** der Prozessor eingerichtet ist, mindestens zwei gleichzeitig aus unterschiedlichen Blickrichtungen aufgenommene kalibrierte Bilder des Kopfes bereitzustellen und mittels geometrischer Positionsbestimmung geometrische Parameter zu ermitteln, die die Position der Augen beschreiben, einen geometrische Parameter der Brillenfassung beschreibenden dreidimensionalen Datensatz bereitzustellen, mittels einer rigiden Transformation die geometrischen Parameter der Brillenfassung und die die Position der Augen beschreibenden geometrischen Parameter zueinander in Bezug zu bringen und aus den die Brillenfassung beschreibenden und den die Position der Augen beschreibenden geometrischen Parametern die Zentrierparameter zu berechnen.
